# EUROPEAN PATENT APPLICATION

(11) **EP 1 569 429 A1**
(43) Date of publication of application: **31.08.2005**
(21) Application number: 05004020.3
(22) Date of filing: 24.02.2005
(51) Int. Cl.: H04M 1/725

(54) **Mobile communication terminal, method for controlling mobile communication terminal, and remote control system using program and email**

(30) Priority: 25.02.2004 JP 2004050194
(71) Applicant: NEC CORPORATION, Tokyo (JP)
(72) Inventor: Takahashi, Makoto, Kohoku-ku, Yokohama-shi, Kanagawa (JP)
(74) Representative: Vossius & Partner

(57) **Abstract**

A mobile communication terminal (1), a method for controlling a mobile communication terminal, and a remote control system using a program and email for making a camera (14) to perform shooting, and receiving a shot image by a simple remote control. A mobile communication terminal comprises means (17) for registering a first keywords, a second keyword, and message information, means (12) for, when email is received, deciding whether or not the email contains the first and second keyword, means (12) for, when the received email contains only the first keyword, providing an instruction as to shooting with preset shooting control data, means (12) for, when both the first and second keywords are contained, providing an instruction as to shooting based on shooting control data contained with the second keyword in the email, and means (19) for, when the received email contains the first keyword, obtaining position information, means (12) for creating and transmitting return email containing the position information and image information obtained through the shooting, and means (12) for, when the received email contains the first keyword, reading and displaying the message information.

## Description

The present invention relates to a mobile communication terminal, a method for controlling a mobile communication terminal, and a remote control system using a program and email. In particular, the present invention relates to a remote control of a mobile communication terminal with a built-in camera.

### Description of the Related Art

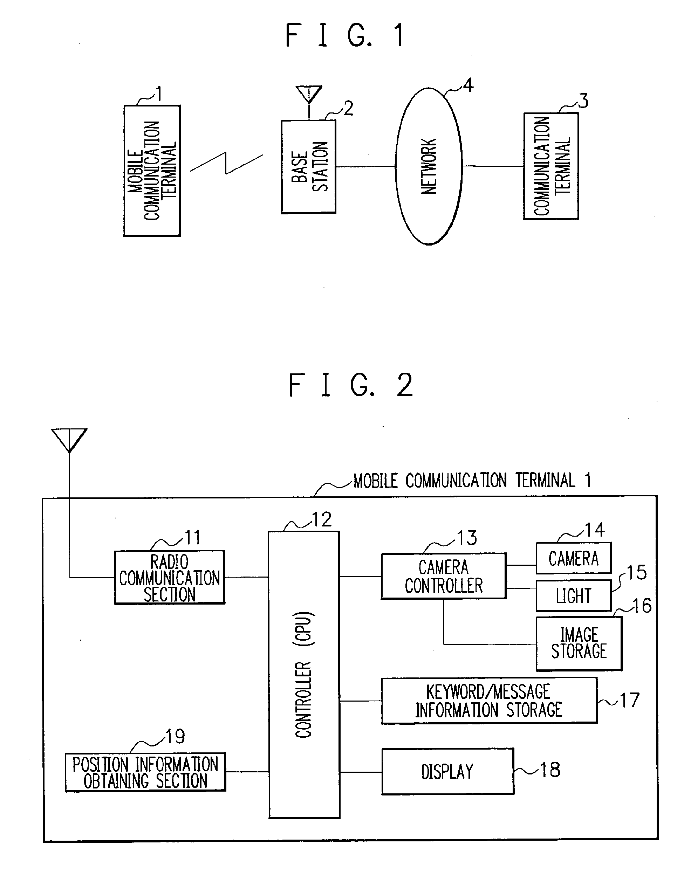

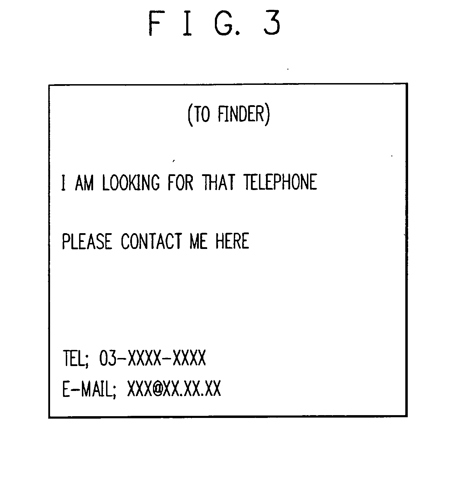

For example, Japanese Patent Application laid open No. 2003-163924 (cited reference 1) discloses a remote control of a mobile communication terminal such as a portable telephone or a PHS (Personal Handyphone System) with a built-in camera. According to the cited reference 1, when the mobile communication terminal for use in fixed-point observation receives email for a shooting request, the mobile communication terminal takes a photograph by the built-in camera, and transmits email with image information to an address specified by the email received (see paragraphs 0040 to 0045, and Figs. 1 and 3 of the cited reference 1).

The above-mentioned invention is applicable to only the mobile communication terminal for use in fixed-point observation. That is, the shot image can be transmitted only to the specified address. Therefore, there is a drawback in that, even if a user has lost the mobile communication terminal or left it behind, the mobile communication terminal can provide no information required to search for it (such as information about the current location of the mobile communication terminal or a message to a finder from the user).

Further, in the invention disclosed in the cited reference 1, although the shooting request by email is made, shooting control data (such data as to indicate ON/OFF state of a flashlight, contrast, or a magnification of zooming) are not specified or controlled. As a result, there is another drawback in that a shooting control cannot be made according to the location, weather, time of day, and the like. Besides, there is a further drawback in that, even when the user receives an unclear image by the first shooting, reshooting cannot be performed with altered shooting control data.

Further, in the invention disclosed in the cited reference 1, the email with an image attached is not automatically returned to the request source. Thus, there is a further drawback in that it is necessary to indicate a destination for every shooting request, or preset the destination.

In view of the foregoing problems, it is an object of the present invention to provide a mobile communication terminal, a method for controlling a mobile communication terminal, and a remote control system using a program and email by which at least any one of those problems can be solved.

According to the first aspect of the present invention, for achieving the above-mentioned objects, there is provided a mobile communication terminal having a camera and an email function, comprising:
registering means for registering a keyword;
deciding means for, when email is received, deciding whether or not the email contains the keyword registered by the registering means;
shooting means for, if the deciding means decides that the received email contains the keyword, actuating the camera to perform shooting; and
email returning means for creating return email with image information obtained through the shooting and returning it to an email sender.

According to the second aspect of the present invention, there is provided a mobile communication terminal having a camera and an email function, comprising:
keyword registering means for registering a first keyword and a second keyword;
deciding means for, when email is received, deciding whether or not the email contains the first and second keywords registered by the keyword registering means;
first shooting means for, if the email contains only the first keyword, actuating the camera to perform shooting with preset shooting control data;
second shooting means for, if the email contains both the first and second keywords, changing the preset shooting control data to shooting control data contained with the second keyword in the email and actuating the camera to perform shooting; and
email returning means for creating return email with image information obtained through the shooting and returning it to an email sender.

According to the third aspect of the present invention, in the first aspect, the mobile communication terminal further comprises message information registering means for registering message information, and message display means for, when the received email contains the keyword, reading and displaying the message information.

According to fourth aspect of the present invention, in the second aspect, the mobile communication terminal further comprises message information registering means for registering message information, and message display means for, when the received email contains the first keyword, reading and displaying the message information.

According to fifth aspect of the present invention, in one of the first, second, third, and fourth aspects, the mobile communication terminal further comprises position information obtaining means for obtaining position information, and the email returning means transmits the return email with the position information obtained by the position information obtaining means.

According to the sixth aspect of the present invention, there is provided a mobile communication terminal having a camera and an email function, comprising:
a keyword storage in which a keyword is previously registered;
an image storage for storing image information obtained through shooting by the camera;
a camera controller having means for, in response to a shooting instruction, actuating the camera to perform shooting, and means for storing the image information in the image storage on completion of the shooting and reporting the completion of shooting; and
a controller having means for, when email is received, deciding whether or not the email contains the keyword registered in the keyword storage, means for, if the email contains the keyword, instructing the camera controller to perform shooting, and means for, in response to the report on the completion of shooting from the camera controller, creating and transmitting return email with the image information stored in the image storage.

According to the seventh aspect of the present invention, there is provided a mobile communication terminal having a camera and an email function, comprising:
a keyword storage in which a first keyword and a second keyword are previously registered;
an image storage for storing image information obtained through shooting by the camera;
a camera controller having means for, when only a shooting instruction is received, actuating the camera to perform shooting with preset shooting control data, means for, if the shooting instruction and shooting control data are received, changing the preset shooting control data to the received shooting control data and actuating the camera to perform shooting, and means for storing the image information in the image storage on completion of the shooting and reporting the completion of shooting;
a controller having means for, when email is received, deciding whether or not the email contains the first and second keywords registered in the keyword storage, means for, if the email contains only the first keyword, instructing the camera controller to perform shooting, means for, if the email contains both the first and second keywords, instructing the camera controller to perform shooting and reporting shooting control data contained with the second keyword in the email, and means for, in response to the report on the completion of shooting from the camera controller, creating and transmitting return email with the image information stored in the image storage.

According to the eighth aspect of the present invention, in the sixth aspect, the mobile communication terminal further comprises a message information storage in which message information is previously registered, and a display, and the controller, when the received email contains the keyword, reads the message information and displays it on the display.

According to the ninth aspect of the present invention, in the seventh aspect, the mobile communication terminal further comprises a message information storage in which message information is previously registered, and a display, and the controller, when the received email contains the first keyword, reads the message information and displays it on the display.

According to the tenth aspect of the present invention, in one of the sixth, seventh, eighth, and ninth aspects, the mobile communication terminal further comprises a position information obtaining section for obtaining position information, and the controller transmits the return email with the position information obtained by the position information obtaining section.

According to the eleventh aspect of the present invention, there is provided a method for controlling a mobile communication terminal comprising the steps of performing shooting and obtaining position information by detecting a specific keyword contained in received email, creating and transmitting return email containing the position information and image information obtained through shooting, and reading and displaying previously registered message information.

According to the twelfth aspect of the present invention, there is provided a method for controlling a mobile communication terminal comprising the steps of registering a keyword, deciding, when email is received, whether or not the email contains the keyword, actuating, if the received email contains the keyword, a built-in camera to perform shooting, and creating and transmitting return email with image information obtained through the shooting.

According to the thirteenth aspect of the present invention, there is provided a method for controlling a mobile communication terminal comprising the steps of registering a first keyword and a second keyword, deciding, when email is received, whether or not the email contains the first and second keywords, actuating, if the received email contains only the first keyword, a built-in camera to perform shooting with preset shooting control data, changing, if both the first and second keywords are contained, the preset shooting control data to the shooting control data contained with the second keyword in the email and actuating the camera to perform shooting, and creating and transmitting return email with image information obtained through the shooting.

According to the fourteenth aspect of the present invention, there is provided a method for controlling a mobile communication terminal comprising the steps of registering a keyword and message information, deciding, when email is received, whether or not the email contains the keyword, actuating, if the received email contains the keyword, a built-in camera to perform shooting, obtaining, if the received email contains the keyword, position information, creating and transmitting return email containing the position information and image information obtained through the shooting, and reading and displaying, if the received email contains the keyword, the message information.

According to the fifteenth aspect of the present invention, there is provided a method for controlling a mobile communication terminal comprising the steps of registering a first keyword, a second keyword, and message information, deciding, when email is received, whether or not the email contains the first and second keywords, actuating, if the received email contains only the first keyword, a built-in camera to perform shooting with preset shooting control data, changing, if both the first and second keywords are contained, the preset shooting control data to the shooting control data contained with the second keyword in the email and actuating the camera to perform shooting, obtaining, if the received email contains the first keyword, position information, creating and transmitting return email containing the position information and image information obtained through the shooting, and reading and displaying, if the received email contains the first keyword, the message information.

According to the sixteenth aspect of the present invention, there is provided a program for making a computer to implement the processes of registering a keyword, when email is received deciding whether or not the email contains the keyword, if the received email contains the keyword, providing an instruction as to shooting, and creating return email with image information obtained through the shooting and returning it to an email sender.

According to the seventeenth aspect of the present invention, there is provided a program for making a computer to implement the processes of registering a first keyword and a second keyword, when email is received, deciding whether or not the email contains the first and second keywords, if the received email contains only the first keyword, providing an instruction as to shooting with preset shooting control data, if both the first and second keywords are contained, providing an instruction as to shooting based on shooting control data contained with the second keyword in the email, and the function of creating and transmitting return email with image information obtained through the shooting.

According to the eighteenth aspect of the present invention, there is provided a program for making a computer to implement the processes of registering a keyword and message information, when email is received, deciding whether or not the email contains the keyword, if the received email contains the keyword, providing an instruction as to shooting, if the received email contains the keyword, obtaining position information, creating and transmitting return email containing the position information and image information obtained through the shooting, and if the received email contains the keyword, reading and displaying the message information.

According to the nineteenth aspect of the present invention, there is provided a program for making a computer to implement the processes of registering a first keyword, a second keyword, and message information, when email is received, deciding whether or not the email contains the first and second keywords, if the received email contains only the first keyword, providing an instruction as to shooting with preset shooting control data, if both the first and second keywords are contained, providing an instruction as to shooting based on shooting control data contained with the second keyword in the email, if the received email contains the first keyword, obtaining position information, creating and transmitting return email containing the position information and image information obtained through the shooting, and if the received email contains the first keyword, reading and displaying the message information.

According to the twentieth aspect of the present invention, there is provided a remote control system using email, comprising a mobile communication terminal, a communication terminal, and a network for connecting them. In the remote control system using the email, the mobile communication terminal includes means for registering a keyword and message information, means for, when email is received, deciding whether or not the email contains the keyword, means for, if the received email contains the keyword, actuating a built-in camera to perform shooting, means for, if the received email contains the keyword, obtaining position information, means for creating return email containing the position information and image information obtained through the shooting and transmitting it to the communication terminal, and means for, if the received email contains the keyword, reading and displaying the message information, and
the communication terminal includes means for transmitting the email containing the keyword to the mobile communication terminal, and means for receiving the return email from the mobile communication terminal.

According to the twenty-first aspect of the present invention, there is provided a remote control system using email, comprising a mobile communication terminal, a communication terminal, and a network for connecting them. In the remote control system using the email, the mobile communication terminal includes means for registering a first keyword, a second keyword, and message information, means for, when email is received, deciding whether or not the email contains the first and second keywords, if the received email contains only the first keyword, actuating a built-in camera to perform shooting with preset shooting control data, means for, if both the first and second keywords are contained, changing the preset shooting control data to shooting control data contained with the second keyword in the email and actuating the camera to perform shooting, means for, if the received email contains the first keyword, obtaining position information, means for creating return email containing the position information and image information obtained through the shooting and transmitting it to the communication terminal, and means for, if the received email contains the first keyword, reading and displaying the message information, and
the communication terminal includes means for transmitting the email containing the keyword to the mobile communication terminal, and means for receiving the return email from the mobile communication terminal.

As described above, in accordance with the present invention, email containing a keyword previously registered with a mobile communication terminal to the terminal. Thereby, shooting can be carried out with the camera of the mobile communication terminal, and a communication terminal can receive a shot image through return email.

Besides, the return email is used as the means for transmitting the shot image, it is not necessary to previously set the destination of the shot image, or indicating the destination through the email for every shooting.

Further, a user can receive the shot image from the mobile communication terminal in remote place only by the simple operation of transmitting email containing a keyword which the user has arbitrarily registered.

The objects and features of the present invention will become more apparent from the consideration of the following detailed description taken in conjunction with the accompanying drawings in which:
Fig. 1 is a diagram showing the configuration of a system according to the first embodiment of the present invention;
Fig. 2 is a diagram showing the configuration of a mobile communication terminal depicted in Fig. 1;
Fig. 3 is a diagram showing an example of message information displayed on the mobile communication terminal;
Fig. 4 is a flowchart showing the operation of the system according to the first embodiment of the present invention; and
Fig. 5 is a flowchart showing the operation of a system according to the second embodiment of the present invention.

Referring now to the drawings, a description of preferred embodiments of the present invention will be given in detail.

Fig. 1 is a diagram showing the configuration of a system according to the first embodiment of the present invention. The system includes a mobile communication terminal 1, a base station 2, a communication terminal 3, and a network 4 such as the Internet.

The mobile communication terminal 1 is a mobile communication terminal such as a portable telephone or a PHS. Fig. 2 is a diagram showing the configuration of the mobile communication terminal 1. Referring to Fig. 2, the mobile communication terminal 1 includes a radio communication section 11, a controller (CPU) 12, a camera controller 13, a camera 14, a light (illuminating device) 15, an image storage 16, a keyword/message information storage 17, a display 18, and a position information obtaining section 19.

The radio communication section 11 transmits/receives voice or image data by radio waves through an antenna to/from the base station 2.

The controller 12 is a control unit such as a CPU (Central Processing Unit) to control- the entire operation of the mobile communication terminal 1. The operation of the controller 12 is controlled by software stored in an ROM (Read Only Memory), which is not shown in the drawings. The controller 12 has functions as follows:
a function for transmitting/receiving email;
a function for registering an input keyword and input message information in corresponding memory areas of the keyword/message information storage 17;
a function for deciding whether or not received email contains the keyword registered in the keyword/message information storage 17;
a function for, when the received email contains the keyword, instructing the camera controller 13 to perform shooting and set shooting control data;
a function for creating return email containing position information obtained from the position information obtaining section 19, and attached shooting image information; and
a function for obtaining the previously registered message information from the keyword/message information storage 17, and displaying it on the display 18.

The operation of the camera controller 13 is controlled by a shooting processing program stored in the ROM (not shown). The camera controller 13 has functions as follows:
a function for instructing the camera 14 to shoot;
a function for actuating the camera 14 and the light 15 while setting shooting control data for the camera 14 and the light 15 according to the instructed shooting control data (on/off of the camera light 15, contrast, white balance, selection of image quality, and the like);
a function for storing image information obtained by the shooting in the image storage 16; and
a function for reporting the completion of shooting to the controller 12 when the image information is stored in the image storage 16.

The image storage 16 is a storage unit in which information on an image shot by the camera 14 is stored.

The keyword/message information storage 17 is a storage unit storing a keyword(s) and message information previously registered by a user of the mobile communication terminal 1. The keyword(s) includes a first keyword and a second keyword, and the keyword/message information storage 17 has memory areas corresponding to the respective keywords. The first keyword is a specific character string used to decide whether or not shooting by the camera 14 is performed, and whether or not return email with a shot image attached should be transmitted. The character string may be such character string as "shooting request mail". The second keyword is a specific character string such as "shooting control data" indicating the shooting control data (on/off of the camera light 15, contrast, white balance, selection of image quality, and the like). Further, the message information means the contents of a message to a finder who discovers the mobile communication terminal 1 as shown in Fig. 3, a diagram showing an example of message information displayed on the mobile communication terminal 1. The message information is registered in a message information storage area of the keyword/message information storage 17.

The display 18 is a display unit such as an LCD (Liquid Crystal Display), and shows a message to the finder of the lost mobile communication terminal 1.

The position information obtaining section 19 obtains information on the current position of the mobile communication terminal 1 by using the GPS (Global Positioning System) function.

The communication terminal 3 is an information processing unit such as a personal computer, which is used by the user of the mobile communication terminal 1 when the mobile communication terminal 1 is lost, and has the email transmitting/receiving function.

A description will now be given of the operation of the system according to the first embodiment of the present invention referring to Figs. 1 to 4.

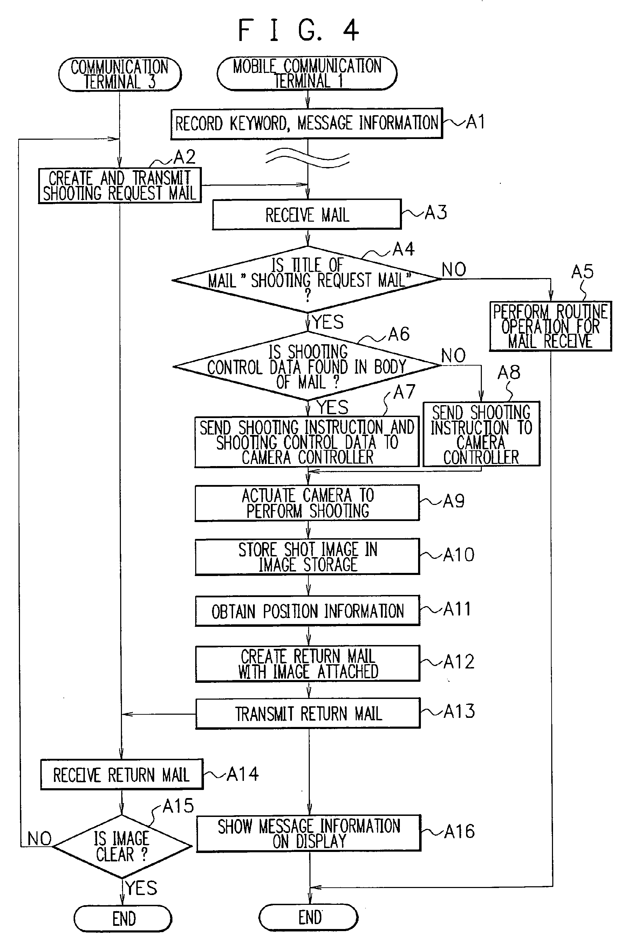

Fig. 4 is a flowchart showing the operation of the system according to the first embodiment of the present invention.

Referring to Fig. 4, the user of the mobile communication terminal 1 operates, as a preparation, an input section (not shown) to register in the keyword/message information storage 17 such data as follows:
the first keyword (for example, "shooting request mail");
the second keyword (for example, "shooting control data"); and message information.

The following keyword and information are stored in the keyword/message information storage 17 in corresponding areas as follows:
a first keyword storage area for storing "shooting request mail";
a second keyword storage area for storing "shooting control data"; and
a message information storage area for storing message information (Step A1).

When the mobile communication terminal 1 is lost, the user transmits the shooting request mail to the mobile communication terminal 1 using the communication terminal 3. The shooting request mail contains the keyword "shooting request mail" registered in Step A1. While the keyword may be contained in either of a title portion or a text portion of the email, for the sake of simplicity, it will be assumed that the keyword is contained in the title in the following description. In addition, if necessary, the user specifies shooting control data (on/off of the camera light 15, contrast, white balance, selection of image quality, and the like) according to current weather and time of the day, and includes the shooting control data in the text. Incidentally, the user writes the contents of respective data setting subsequent to a predetermined character string (for example, "shooting control data") in the text (Step A2).

The controller 12 of the mobile communication terminal 1 receives the shooting request mail from the communication terminal 3 through the network 4, the base station 2, and the radio communication section 11 (Step A3). The controller 12 decides whether or not the keyword 5 ("shooting request mail") registered in the first keyword area of the keyword/message information storage 17 is found in the title of the received email (Step A4). If the keyword "shooting request mail" is not found in the title, the controller 12 performs a routine operation for receiving email, and the process is terminated (Step A5).

In Step A4, if the keyword "shooting request mail" is found in the title, the controller 12 refers to the second keyword area of the keyword/message information storage 17. Further, the controller 12 decides whether or not the keyword "shooting control data" registered in the second keyword area is found in the text of the received email (Step A6). If the keyword is found, the controller 12 sends a shooting instruction and the shooting control data to the camera controller 13. In this case, the controller 12 recognizes the contents described subsequent to the character string "shooting control data" as the shooting control data to be used for the setting (Step A7). If the keyword is not found, the controller 12 sends only the shooting instruction to the camera controller 13 (Step A8).

Having received only the shooting instruction from the controller 12, the camera controller 13 actuates the camera 14 and the light 15 to perform the shooting with the preset shooting control data. The "preset shooting control data" indicates data previously set by the user. If the user has not set the data, predetermined system data (default data) is used. If both the shooting instruction and the shooting control data are sent from the controller 12, the camera controller 13 changes the preset shooting control data to the received shooting control data, and thereafter actuates the camera 14 and the light 15 to perform the shooting (Step A9).

After the completion of shooting by the camera 14, the camera controller 13 stores a shot image in the image storage 16, and reports the completion of shooting to the controller 12 (Step A10).

In response to the report on the completion of shooting, the controller 12 makes the position information obtaining section 19 to obtain position information, and receives the obtained position information (Step A11). Thereafter, the controller 12 creates and transmits return email to the communication terminal 3. To the return email is attached the position information of the mobile communication terminal 1 obtained in Step A11 and the shot image information stored in the image storage 16 (Step A12).

Next, the controller 12 transmits the return email to the communication terminal 3 (Step A13), and the communication terminal 3 receives the return email. The user of the mobile communication terminal 1 can learn the current position of the mobile communication terminal 1 by the position information described in the return email. Further, the user of the mobile communication terminal 1 refers to the shot image information attached to the return email to know a scene and circumstances around the mobile communication terminal 1 (Step A14).

If the sharpness or clarity of the shot image does not satisfy the user of the mobile communication terminal 1, the process returns to Step A2 where the user of the mobile communication terminal 1 creates the shooting request mail and transmits it to the mobile communication terminal 1 once again. In this case, based on the condition of the received image, the user of the mobile communication terminal 1 creates new shooting control data for obtaining a clearer image and transmits email containing the data (Step A15). After that, the processes from Step A2 to Step A15 are repeated the number of times required (until the user of the mobile communication terminal 1 obtains a satisfying shot image or gives up obtaining it).

After transmitting the return email to the communication terminal 3, the controller 12 of the mobile communication terminal 1 refers to the message information storage area of the keyword/message information storage 17 to obtain previously registered message information. Then, the controller 12 shows the obtained message information on the display 18. As illustratively shown in Fig. 3, the message is directed to the finder of the lost mobile communication terminal 1, and contains a contact point and the like. The contact point may be the phone number and email address of the user of the mobile communication terminal 1, or those of the third party (such as the operator of a lost property office with which the user makes a contract) (Step A16).

With the message shown in Step A16, the finder makes contact with the contact point by using the phone number or the email address contained in the message. Examples of the method for making contact include:
the finder inputs the email address or the phone number shown on the display 18 into the finder's mobile communication terminal or the mobile communication terminal 1 found by him/ her; and
"contact button" is displayed on a message screen, and the finder pushes down the button on the screen to automatically establish contact.

In the latter case, the "contact button" is displayed instead of the phone number and the email address shown in Fig. 3. Further, as the "contact button", both of "phone contact button" and "mail contact button" may be displayed such that the finder can select one of the buttons. Or, only one of the buttons may be displayed. The link information (contact phone number, contact mail address, the contents of email, and the like) corresponding to the contact button(s) are previously registered in the keyword/message information storage 17 or another storage (not shown). Thus, when the finder pushes down the "contact button", the controller 12 reads the corresponding link information to automatically make a call or transmit email.

A description will now be given of the second embodiment of the present invention referring to Figs. 2, 4, and 5.

The second embodiment differs from the first embodiment in that the two steps, obtaining the position information and displaying the message information, on the mobile communication terminal 1 are omitted.

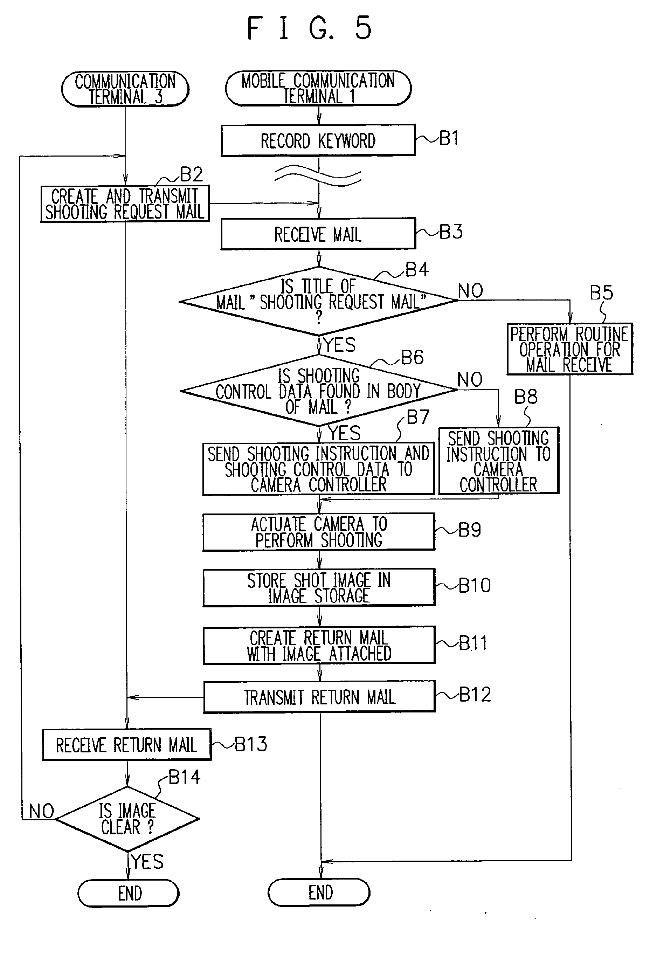

Therefore, according to the second embodiment, the position information obtaining section 19 of the mobile communication terminal 1 shown in Fig. 2 is not necessary, and the keyword/message information storage 17 serves as a keyword storage. Further, in the operation shown in Fig. 5 showing the operation of the system according to the second embodiment of the present invention, Step A11 and Step A16 of the first embodiment in Fig. 4 are omitted. Hence, return email created in Step B11 of Fig. 5 contains no position information. Further, only a keyword is registered in Step B1 of Fig. 5 unlike Step A1 of Fig. 4. Other steps of Fig. 5 are similar to those in the first embodiment shown in Fig. 4. That is, Steps B2 to B10 of Fig. 5 correspond to Steps A2 to A10 of Fig. 4, and Steps B12 to B14 of Fig. 5 correspond to Steps A13 to A15 of Fig. 4.

As described above, in the second embodiment, the position information and the display of a message for the finder of the mobile communication terminal 1 in the first embodiment are omitted. Thus, according to the second embodiment, there are advantages in that, in addition to the applicability to the case of the loss of the mobile communication terminal 1, it is also possible to apply the present invention to other purposes as follows:
a remote control of the mobile communication terminal 1 for use in fixed-point observation as, for example, a security camera; and
a remote control of the mobile communication terminal 1 for shooting the user's own portrait.

Further, in the first embodiment, the operation is made to obtain and report, in addition to the shooting of an image, the position information showing the current position of the mobile communication terminal 1 and display the message information. Hence, there is an advantage in that the position information enables the user to grasp the location where the mobile communication terminal 1 is left. Further, since the finder can make contact with the user by reading the message, there is another advantage in that the lost mobile communication terminal 1 can be restored to the user earlier.

Further, the first and second embodiments offer the common advantages as follows:
proper shooting is available in consideration to weather, time of the day, or the like because the shooting control data can be specified for the shooting through the transmitted email;
even when the sharpness or clarity of the received image does not satisfy the user, a more clear image can be obtained because the shooting control data can be changed and specified repeatedly any number of times; and
since the mobile communication terminal 1 transmits a shot image in response to the received email, the image can be automatically sent to the user even if the destination mail address is not previously registered or is specified by the email for every shooting request.

Incidentally, in the above-mentioned first and second embodiments, the communication terminal 3 is the information processing unit such as a personal computer. However, the communication terminal 3 may be a mobile communication terminal such as a portable telephone.

Additionally, in the above-mentioned first and second embodiments, the email may contain only the shooting instruction, and may be omitted the operation in relation to the shooting control data in Steps A6, A7 (Fig. 4), Steps B6 and B7 (Fig. 5).

Further, while the mobile communication terminal 1 obtains the position information to report it and displays the message information in the first embodiment, only one of them may be performed.

Still further, the message information is displayed after the return email is transmitted in the first embodiment. However, the display timing should not be limited as long as the message information is displayed after the decision as to whether or not the received email is the shooting request mail.

Still further, in the first embodiment, both the keyword and the message information are registered in the keyword/message information storage 17. However, there may be two storages, and the keyword and the message information may be registered independently in the respective storages.

While preferred embodiments of the present invention have been described using specific terms, such description is for illustrative purposes only, and it is to be understood that changes and variations may be made without departing from the spirit or scope of the following claims.

## Claims

1. A mobile communication terminal having a camera and an email function, comprising:
registering means for registering a keyword;
deciding means for, when email is received, deciding whether or not the email contains the keyword registered by the registering means;
shooting means for, if the deciding means decides that the received email contains the keyword, actuating the camera to perform shooting; and
email returning means for creating return email with image information obtained through the shooting and returning it to an email sender.

2. A mobile communication terminal having a camera and an email function, comprising:
keyword registering means for registering a first keyword and a second keyword;
deciding means for, when email is received, deciding whether or not the email contains the first and second keywords registered by the keyword registering means;
first shooting means for, if the email contains only the first keyword, actuating the camera to perform shooting with preset shooting control data;
second shooting means for, if the email contains both the first and second keywords, changing the preset shooting control data to shooting control data contained with the second keyword in the email and actuating the camera to perform shooting; and
email returning means for creating return email with image information obtained through the shooting and returning it to an email sender.

3. The mobile communication terminal according to claim 1, further comprising message information registering means for registering message information, and message display means for, when the received email contains the keyword, reading and displaying the message information.

4. The mobile communication terminal according to claim 2, further comprising message information registering means for registering message information, and message display means for, when the received email contains the first keyword, reading and displaying the message information.

5. The mobile communication terminal according to any of claims 1 to 3, further comprising position information obtaining means for obtaining position information, wherein the email returning means transmits the return email with the position information obtained by the position information obtaining means.

6. A mobile communication terminal having a camera and an email function, comprising:
a keyword storage in which a keyword is previously registered;
an image storage for storing image information obtained through shooting by the camera;
a camera controller including: means for, in response to a shooting instruction, actuating the camera to perform shooting; and means for storing the image information in the image storage on completion of the shooting and reporting the completion of shooting; and
a controller including: means for, when email is received, deciding whether or not the email contains the keyword registered in the keyword storage; means for, if the email contains the keyword, instructing the camera controller to perform shooting; and means for, in response to the report on the completion of shooting from the camera controller, creating and transmitting return email with the image information stored in the image storage.

7. A mobile communication terminal having a camera and an email function, comprising:
a keyword storage in which a first keyword and a second keyword are previously registered;
an image storage for storing image information obtained through shooting by the camera;
a camera controller including: means for, when only a shooting instruction is received, actuating the camera to perform shooting with preset shooting control data; means for, if the shooting instruction and shooting control data are received, changing the preset shooting control data to the received shooting control data and actuating the camera to perform shooting; and means for storing the image information in the image storage on completion of the shooting and reporting the completion of shooting;
a controller including: means for, when email is received, deciding whether or not the email contains the first and second keywords registered in the keyword storage; means for, if the email contains only the first keyword, instructing the camera controller to perform shooting; means for, if the email contains both the first and second keywords, instructing the camera controller to perform shooting and reporting shooting control data contained with the second keyword in the email; and means for, in response to the report on the completion of shooting from the camera controller, creating and transmitting return email with the image information stored in the image storage.

8. The mobile communication terminal according to claim 6, further comprising a message information storage in which message information is previously registered, and a display, wherein, when the received email contains the keyword, the controller reads the message information and displays it on the display.

9. The mobile communication terminal according to claim 7, further comprising a message information storage in which message information is previously registered, and a display, wherein, when the received email contains the first keyword, the controller reads the message information and displays it on the display.

10. The mobile communication terminal according to any of claims 6 to 9, further comprising a position information obtaining section for obtaining position information, wherein the controller transmits the return email with the position information obtained by the position information obtaining section.

11. A method for controlling a mobile communication terminal comprising the steps of:
performing shooting and obtaining position information by detecting a specific keyword contained in received email;
creating and transmitting return email containing the position information and image information obtained through shooting; and
reading and displaying previously registered message information.

12. A method for controlling a mobile communication terminal comprising the steps of:
registering a keyword;
deciding whether or not email contains the keyword when the email is received;
actuating a built-in camera to perform shooting when the received email contains the keyword; and
creating and transmitting return email with image information obtained through the shooting.

13. A method for controlling a mobile communication terminal comprising the steps of:
registering a first keyword and a second keyword;
deciding whether or not email contains the first and second keywords when the email is received;
actuating a built-in camera to perform shooting with preset shooting control data when the received email contains only the first keyword;
changing the preset shooting control data to shooting control data contained with the second keyword in the email and actuating the camera to perform shooting when both the first and second keywords are contained; and
creating and transmitting return email with image information obtained through the shooting.

14. A method for controlling a mobile communication terminal comprising the steps of:
registering a keyword and message information;
deciding whether or not email contains the keyword when the email is received;
actuating a built-in camera to perform shooting when the received email contains the keyword;
obtaining position information when the received email contains the keyword;
creating and transmitting return email containing the position information and image information obtained through the shooting; and
reading and displaying the message information when the received email contains the keyword.

15. A method for controlling a mobile communication terminal comprising the steps of:
registering a first keyword, a second keyword, and message information;
deciding whether or not email contains the first and second keywords when the email is received;
actuating a built-in camera to perform shooting with preset shooting control data when the received email contains only the first keyword;
changing the preset shooting control data to shooting control data contained with the second keyword in the email and actuating the camera to perform shooting when both the first and second keywords are contained;
obtaining position information when the received email contains the first keyword;
creating and transmitting return email containing the position information and image information obtained through the shooting; and
reading and displaying the message information when the received email contains the first keyword.

16. A program for making a computer to implement the processes of:
registering a keyword;
deciding whether or not email contains the keyword when the email is received;
providing an instruction as to shooting when the received email contains the keyword; and
creating return email with image information obtained through the shooting and returning it to an email sender.

17. A program for making a computer to implement the processes of:
registering a first keyword and a second keyword;
deciding whether or not email contains the first and second keywords when the email is received;
providing an instruction as to shooting with preset shooting control data when the received email contains only the first keyword;
providing an instruction as to shooting based on shooting control data contained with the second keyword in the email when both the first and second keywords are contained; and
creating and transmitting return email with image information obtained through the shooting.

18. A program for making a computer to implement the processes of:
registering a keyword and message information;
deciding whether or not email contains the keyword when the email is received;
providing an instruction as to shooting when the received email contains the keyword;
obtaining position information when the received email contains the keyword;
creating and transmitting return email containing the position information and image information obtained through the shooting; and
reading and displaying the message information when the received email contains the keyword.

19. A program for making a computer to implement the processes of:
registering a first keyword, a second keyword, and message information;
deciding whether or not email contains the first and second keywords when the email is received;
providing an instruction as to shooting with preset shooting control data when the received email contains only the first keyword;
providing an instruction as to shooting based on shooting control data contained with the second keyword in the email when both the first and second keywords are contained;
obtaining position information when the received email contains the first keyword;
creating and transmitting return email containing the position information and image information obtained through the shooting; and
reading and displaying the message information when the received email contains the first keyword.

20. A remote control system using email, comprising a mobile communication terminal, a communication terminal, and a network for connecting them, wherein:
the mobile communication terminal includes: means for registering a keyword and message information; means for, when email is received, deciding whether or not the email contains the keyword; means for, when the received email contains the keyword, actuating a built-in camera to perform shooting; means for, when the received email contains the keyword, obtaining position information; means for creating return email containing the position information and image information obtained through the shooting and transmitting it to the communication terminal; and means for, when the received email contains the keyword, reading and displaying the message information; and
the communication terminal includes: means for transmitting the email containing the keyword to the mobile communication terminal; and means for receiving the return email from the mobile communication terminal.

21. A remote control system using email, comprising a mobile communication terminal, a communication terminal, and a network for connecting them, wherein:
the mobile communication terminal includes: means for registering a first keyword, a second keyword, and message information; means for, when email is received, deciding whether or not the email contains the first and second keywords; means for, when the received email contains only the first keyword, actuating a built-in camera to perform shooting with preset shooting control data; means for, when both the first and second keywords are contained, changing the preset shooting control data to shooting control data contained with the second keyword in the email and actuating the camera to perform shooting; means for, when the received email contains the first keyword, obtaining position information; means for creating return email containing the position information and image information obtained through the shooting and transmitting it to the communication terminal; and means for, when the received email contains the first keyword, reading and displaying the message information; and
the communication terminal includes: means for transmitting the email containing the keyword to the mobile communication terminal; and means for receiving the return email from the mobile communication terminal.
